# EUROPEAN PATENT SPECIFICATION

(11) **EP 2 157 806 B1**
(45) Date of publication and mention of the grant of the patent: **11.02.2015**
(21) Application number: 07855868.1
(22) Date of filing: 28.12.2007
(51) Int. Cl.: H04W 36/30, H04W 76/00, H04W 84/00, H04W 48/18

(54) **METHOD FOR JOINING A WIRELESS COMMUNICATION DEVICE TO A WIRELESS TRANSMISSION NETWORK**
VERFAHREN ZUM VERBINDEN EINES DRAHTLOSEN KOMMUNIKATIONSGERÄTS MIT EINEM DRAHTLOSEN ÜBERTRAGUNGSNETZ
PROCÉDÉ POUR RATTACHER UN DISPOSITIF DE COMMUNICATION SANS FIL À UN RÉSEAU DE TRANSMISSION SANS FIL

(30) Priority: 13.04.2007 CN 200710101410
(43) Date of publication of application: 24.02.2010
(73) Proprietor: ZTE Corporation, Guangdong Province 518057 (CN)
(72) Inventor: CAI, Sean, San Diego, California 92130 (US); XU, Ling, Shenzhen City Guangdong Province 518057 (CN)
(74) Representative: Zerbi, Guido Maria
(86) International application number: PCT/CN2007/003867
(87) International publication number: WO 2008/124987

(56) References cited:
- EP-A1- 1 675 321
- CN-A- 1 713 606
- CN-A- 1 897 758
- CN-A- 1 947 436
- US-A1- 2004 190 476
- US-A1- 2005 232 212

## Description

### Technical Field

The present invention relates to a method for a wireless communication device including wireless relay station and mobile station to join a wireless transmission network.

### Background of the Invention

Nowadays, there are a variety of wireless communication systems, of which the commonalities are: the complication of stations' construction, the cable support needed by the base stations, and the relatively fixed coverage of the base stations. Due to the complexity of the wireless communication environment, such as buildings' obstruction in the dissemination path or obstacles between the receiving antenna and transmitting antenna of a base station and a user, a user may be in the blind area of a base station service. As such, although the user is in the area covered by the base station, he can not communicate with the base station normally, thus the user's communication quality is severely deteriorated; or even the user can not access to the system. For a user at the edge of a cell, the signal decays severely since the signal has traveled a relatively long path, thus the communication quality and service quality between the user and the base station is impacted, for example, in order to guarantee a user at the edge of a cell can receive the signal from the base station normally, a low order encoding and modulation method has to be applied, therefore the user's data rate is decreased; and if a high order encoding and modulation method is applied to guarantee the user's data rate, the transmission power of both the base station and the use need to be increased, which will interfere other users in the cell and users in the adjacent cells. In addition, with the development of the application, these wireless access systems can not well meet the wireless access requirement of random burst and covering some areas unreachable by cable.

Therefore, in order to expand the coverage of the base station service area and improve the service quality of users at the edge of a cell, multiple types of relay systems have been developed so far, that is, the communication between a base station and a user is implemented through a relay station.

The relay system that emerged earlier is an analog relay system. After a relay station receives a signal, the signal received is analogically amplified without digital processing and then sent to a user, a base station, or the next relay station. This relay method is simple, but its disadvantage is obvious: besides the effective signal, the in-band interference signal received by the relay station is also amplified and sent in the transmission path. Therefore, the reliability of the useful signal is decreased after passing the relay station.

With the development of technology, the digital relay system is becoming mature. The system can demodulate and decode the received signal to acquire the source signal, and after storing and processing the signal, the system encodes and modulates the signal again, and sends the signal to a user, a base station, or the next relay station. This relay method prevents the transmission of the noise in the analog signal, and improves the reliability of the transmission.

Generally, a wireless communication system provides a point-to-multipoint network topology structure for high-speed wireless data transmission. In order to solve the problem in the communication quality of the users at the edge of a cell or in the blind area of a base station service, the concept of wireless relay station is introduced into the wireless communication network. However, the fixity, nomadic property and mobility of the wireless relay station is a new challenge for the management of the whole wireless communication network, such as dynamic construction and adjustment of the wireless communication network.

The introduction of this kind of wireless relay stations greatly complicates the management of the wireless communication network. The reason is that this kind of wireless relay station can perform base band processing by itself, has a certain capability of control and resource scheduling, and is able to select a base station or a wireless relay station to access to. Whereas, the construction, maintenance and optimization of the conventional relay stations are implemented manually, and the workload is very heavy in practice. Features of the digital relay station provide a basis for the self-configuration and self-optimization of the wireless relay station.

In a cable network, such as cable IP (Internet Protocol) network, a routing table can be used by a routing gateway to select the optimal path for route optimization, and the routing gateway needs to dynamically maintain the routing table. But this method is not suitable to apply in a wireless transmission network for the following reasons:
1) Each transmission node in a wireless transmission network may cause the update of the wireless links due to the changing of the wireless environment state. This is different from the fixed connection in a cable network.
2) The reliability of a wireless link in a wireless transmission network is different from that of a cable network.
3) Each wireless link in a wireless transmission network needs to occupy wireless resources, and the wireless link occupies the wireless resources once it is established.

Because of the above problems, a new solution is needed to solve how a wireless relay station performs self-configuration and self-optimization in a wireless transmission network.

The present invention mainly concerns how wireless communication devices (including relay stations (RS) or mobile stations) join a wireless transmission network after the access so that they can effectively and quickly acquire high-quality service. Another example is found in document US2005/232212, 20/10/2005.

### Summary of the Invention

The technical problem to be solved by the present invention is to overcome the shortcoming of the prior art and provide a method for a wireless communication device to join a wireless transmission network, in order that the wireless communication device can effectively and quickly obtain high-quality service.

In order to solve the above technical problem, the present invention provides a method for a wireless communication device to join a wireless transmission network, the wireless transmission network being a wireless transmission network group consisting of a base station and wireless relay stations subordinated to the base station; after said wireless communication device accesses to the wireless transmission network group through a source node, the method comprising the following steps of:
(a) if said wireless communication device needs a handover, completes the handover successfully by accessing to a target node and establishes a service connection, proceeding to step (b), otherwise proceeding to step (c);
(b) a management node of the wireless transmission network group to which the target node accessed to by said wireless communication device belongs updating stored wireless network topology information of the wireless network group, to complete the joining of said wireless communication device, and the method ending;
(c) a management node of the wireless transmission network group to which the source node accessed to by said wireless communication device belongs updating stored wireless network topology information of the wireless transmission network group, to complete the joining of said wireless communication device;
wherein said source node is a source base station or source wireless relay station; and said target node is a target base station or target wireless relay station.

Moreover, said wireless communication device is a wireless relay station or a mobile station.

Moreover, the method further comprising: in step (a), judging whether said wireless communication device needs said handover according to handover judgment basic information; and said handover judgment basic information comprising: the wireless network topology information of the wireless transmission network group to which said source node belongs.

Moreover, step (a) further divides into the following sub-steps of:
(a11) said wireless communication device judging whether a handover is needed according to said handover judgment basic information and a predetermined handover judgment strategy, and if the handover is needed, said wireless communication device sending a link update request to said source base station; and judging whether the handover is allowed according to a link update response fed back by said source base station, and if the handover is allowed, proceeding to step (a12), otherwise proceeding to step (c);
(a12) said wireless communication device accessing to a target node designated in the link update response; and if the access is successful, proceeding to step (b); otherwise proceeding to step (c).

Moreover, the method further comprising: in step (a11), after receiving said link update request, said source base station judging whether said wireless communication device is allowed to handover according to the handover judgment basic information and the predetermined handover judgment strategy, and if the handover is allowed, said source base station including identifier information of a target node selected in said link update response.

Moreover, the method further comprising: in step (a11), said link update request comprising identifier information of a target node to which the handover is requested; and said source base station judging whether the handover is allowed further according to the identifier information.

Moreover, step (a) further divides into the following sub-steps of:
(a21) the management node of the wireless transmission network group to which said source node belongs judging whether said wireless communication device needs a handover according to said handover judgment basic information and a predetermined handover judgment strategy, if the handover is needed, the management node determining a target node, notifying said wireless communication device of the target node determined, and proceeding to step (a22); otherwise proceeding to step (c);
(a22) said wireless communication device accessing to said target node; and if the access is successful, proceeding to step (b); otherwise proceeding to step (c).

Moreover, said wireless communication device accesses to the wireless transmission network group through a source wireless relay station; and step (a) further divides into the following sub-steps of:
(a21) said source wireless relay station judging whether said wireless communication device needs a handover according to said handover judgment basic information and a predetermined handover judgment strategy, and if the handover is needed, said source wireless relay station determining a target node, notifying said wireless communication device of the target node determined, and proceeding to step (a22); otherwise proceeding to step (c);
(a22) said wireless communication device accessing to said target node; and if the access is successful, proceeding to step (b); otherwise proceeding to step (c).

Moreover, the wireless network topology information of the wireless transmission network group to which said source wireless relay station belongs comprised in said handover judgment basic information is the wireless network topology information of a sub-network of the source wireless relay station.

Moreover, said handover judgment basic information further comprises wireless link status information; and after said wireless communication device accesses to the wireless transmission network group through the source node, before step (a1), the method further comprises the following steps of:
(a31) said management node designating said wireless communication device to perform a detection of the wireless link status and designating relative nodes to cooperate for the detection;
(a32) said wireless communication device sending a test signal; and said relative nodes which receive said test signal feeding back test responses to said wireless communication device;
(a33) said wireless communication device generating a detection result according to said test responses and sending the detection result to said management node;
(a34) said management node acquiring the wireless link status information according to the detection result and updating the wireless link status information stored.

Moreover, said handover judgment basic information further comprises: wireless link status information, and/or information of adjacent cells; and said information of adjacent cells is: the wireless network topology information, or the wireless network topology information together with the wireless link status information of adjacent wireless transmission network groups.

Moreover, said handover judgment strategy is: if a number of hops between a node and said wireless communication device is smaller than the number of hops between said source node and said wireless communication device, and/or a wireless link quality of the node is better than that of said source node, a handover is performed and the node is determined as the target node.

Moreover, the method further comprising: in step (b) and step (c),
if said target node or source node is a wireless relay station, and the wireless relay station is an agent node which stores the wireless network topology information of a transmission sub-network subordinated to the wireless relay station, the agent node updating the wireless network topology information, and reporting update information of the access of said wireless communication device to said management node; and said management node updating said stored wireless network topology information according to the update information;
if said target node or source node is a wireless relay station, and the wireless relay station is not an agent node, the wireless relay station reporting the update information of the access of said wireless communication device to said management node; and said management node updating said stored wireless network topology information according to the update information;
if said target node or source node is a base station, and the base station is the management node, the base station updating said stored wireless network topology information according to the update information of the access of said wireless communication device;
if said target node or source node is a base station, and the base station is not the management node, the base station reporting the update information of the access of said wireless communication device to said management node; and said management node updating said stored wireless network topology information according to the update information.

Moreover, the method further comprising: after updating said wireless network topology information, said management node further updating corresponding wireless link status information.

Moreover, the method further comprising: before said wireless communication device accesses to the wireless transmission network group through the source node, said wireless communication device receiving a broadcasting message from the wireless transmission network group; and storing the wireless network topology information and wireless link status information of the wireless transmission network group comprised in the message.

Moreover, said broadcasting message is a downlink channel description message.

Moreover, said wireless network topology information comprises information of a connection relationship and a number of connection hops between any two nodes in the wireless transmission network group; and said management node is a node in the wireless transmission network group in charge of constructing, updating and transmitting the wireless network topology information of the wireless transmission network group within the wireless transmission network group.

To sum up, with the method of the present invention, the topology relationship information, wireless link status information and information of adjacent cells can be fully utilized in a wireless communication system, so that a wireless relay station can access to a base station or wireless relay station which can provide better QoS, thereby a better service can be obtained and the overall performance of the wireless transmission network is improved. In addition, performing a handover judgment immediately after the access, can avoid an unnecessary information update process.

### Brief Description of the Drawings

FIG. 1 is a schematic diagram of the system structure of a wireless communication system applied in an embodiment of the present invention;
FIG. 2 ~ FIG. 5 are four illustrative flow charts of the adaptive management methods of a wireless transmission network;
FIG. 6 is a flow chart of the method for a wireless communication device to join a wireless transmission network in accordance with the first embodiment of the present invention;
FIG. 7 is a flow chart of the method for a wireless communication device to join a wireless transmission network in accordance with the second embodiment of the present invention;
FIG. 8 is a flow chart of the method for a wireless communication device to join a wireless transmission network in accordance with the third embodiment of the present invention;
FIG. 9 is a flow chart of the method for a wireless communication device to join a wireless transmission network in accordance with the fourth embodiment of the present invention;
FIG. 10 is a flow chart of the method for a wireless communication device to join a wireless transmission network in accordance with the fifth embodiment of the present invention;

### Preferred Embodiments of the Present Invention

The present invention will be described in detail with combination of the accompanying drawings and embodiments.

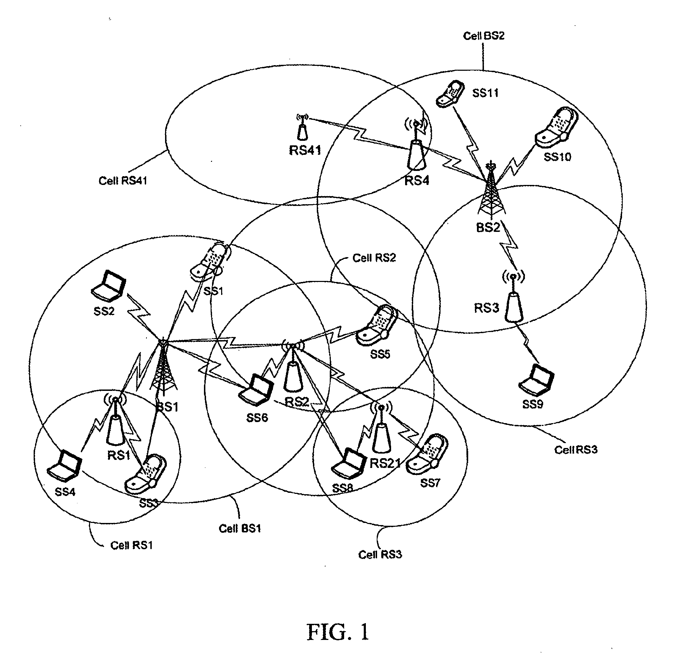

FIG. 1 is a schematic diagram of the system structure of the wireless communication system applied in an embodiment of the present invention. As shown in FIG. 1, the system comprises the following parts:
1) At least one base station, sending synchronization signals and control information for the access and control of mobile stations and relay stations; the base station may directly communicate with the mobile stations; the base station may also communicate with the mobile stations through the relay stations; two base stations, BS1 and BS2, are depicted in FIG. 1.
2) At least one first-hop relay station (RS), directly accessing to a base station, and the base station and the wireless relay station sending synchronization signals and control information for the access and control of mobile stations and other relay stations; four first-hop relay stations, RS1, RS2, RS3 and RS4, are depicted in Fig. 1.
3) At least one mobile station, communicating with a base station through relay stations; such as SS3 and SS4 in FIG. 1.
4) A multi-hop relay station, which might be included in the system; two multi-hop relay stations, RS21 and RS41, are depicted in FIG. 1.
5) A mobile station directly communicating with a base station, which might be included in the system; such as SS1 and SS2 in FIG. 1.

As shown in FIG. 1, each base station may have one or more wireless relay stations, and each wireless relay station may further have wireless relay stations according to its demand, that is, the mode of BS→RS→RS is adopted, for example, RS21 in FIG. 1 is a second hop wireless relay station. Some RS, such as RS1, is to expand the network coverage, and some RS, such as RS2, is to increase the throughput. Mobile stations can receive signals from multiple base stations and wireless relay stations simultaneously.

Thereby, the present invention refers to the group composed by a BS and the RSs subordinated to the BS (the RSs which directly or indirectly access to the BS) as a wireless transmission network group. One base station has only one wireless transmission network group and different base stations belong to different wireless transmission network groups.

### The adaptive management method of a wireless transmission network

### The first scheme

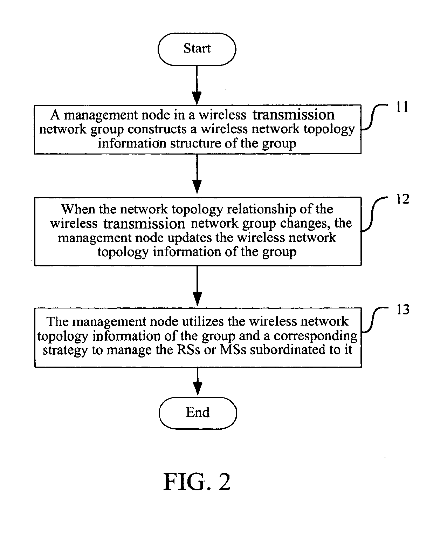

As shown in FIG. 2, this scheme comprises the following steps:
Step 11, a management node in a wireless transmission network group constructs a wireless network topology information structure of the group;

The wireless network topology information structure in this scheme comprises information of the nodes at two ends of wireless links in the wireless transmission network group, and the nodes at the ends can be represented by the base station ID (BSID) and relay station ID (RSID).

The above information can be illustrated with a basic relationship matrix in which the connection relationship between any two nodes in the wireless transmission network group is described, including the information whether there is a connection or not, and the information of the number of hops where there is a connection.

Taking FIG. 1 for example, the relationship matrix of the wireless transmission network group to which the base station at the left side belongs is as follows:

| | BS | RS1 | RS2 | RS21 |
|---|---|---|---|---|
| BS | 0 | 1 | 1 | 2 |
| RS1 | 1 | 0 | 0 | 0 |
| RS2 | 1 | 0 | 0 | 1 |
| RS21 | 2 | 0 | 1 | 0 |

Similarly, the relationship matrix of the wireless transmission network group to which the base station at the right side of Fig. 1 belongs is as follows:

| | BS | RS1 | RS11 | RS2 |
|---|---|---|---|---|
| BS | 0 | 1 | 2 | 1 |
| RS1 | 1 | 0 | 1 | 0 |
| RS11 | 2 | 1 | 0 | 0 |
| RS2 | 1 | 0 | 0 | 0 |

Here, the first row and the first column are the numbers of all the nodes in the wireless transmission network group. And "0" indicates that there is no wireless link between these two nodes. While "1" indicates that there is a direct wireless link between these two nodes, and taking the "1" in the second row and third column for example, the "1" indicates that there is a direct wireless connection between RS1 and BS. "2" indicates that these two nodes are connected by two wireless links. Taking the "2" in the second row and the fifth column for example, the "2" indicates that RS21 and BS are connected by two wireless links, that is, RS21 connects with BS through a wireless relay station.

Therefore, a "1" in the relationship matrix corresponds to a wireless link, and the corresponding node in the first row and that in the first column are just the nodes at the two ends of the wireless link. Meanwhile, from the relationship matrix, the information of the number of hops between the two nodes can be directly obtained.

There are several options for the configuration of the node with management function:
The first option is central control, in which the base station is generally the unique management node for constructing the wireless network topology information structure of the group and taking charge of the updating and transmitting of the information. But the possibility that some RS is designated as the management node in special cases is not ruled out.

The second option is distributed control, in which the base station is the management node for constructing the wireless network topology information structure of the group and taking charge of the updating and transmitting of the information. In addition, a wireless relay station can bean agent node to manage the wireless transmission sub-network subordinated to the wireless relay station, and the nodes in the wireless transmission sub-network comprise the agent node and one or more RS accessing to the BS through the agent node, for example, RS2 at the left side can be an agent node to manage RS21.

The agent node constructs the wireless network topology information structure of the sub-network, takes charge of the updating and transmitting of the information within the sub-network, and also needs to send the wireless network topology information structure of the sub-network to the base station, and then the base station updates the whole wireless transmission network group.

In this case, the wireless network topology information structure of the sub-network constructed by agent node RS is similar to above-mentioned structure constructed by the base station, that is, it includes the information of nodes at two ends of wireless links in the wireless transmission sub-network, and may further include the information of the number of hops between the two nodes. This structure can be described through the same way of above-mentioned basic relationship matrix.

For example, RS1 is a node having relay station RS11 subordinated to it, thus it can manage such a relationship matix by itself:

| | RS1 | RS11 |
|---|---|---|
| RS1 | 0 | 1 |
| RS11 | 1 | 0 |

The explanation of the information in this basic relationship matrix has been illustrated above, and will not be repeated.

Step 12, the management node updates the wireless network topology information of the group when the network topology relationship of the wireless transmission network group changes;

A new RS joining in, handover of an existing RS, connection termination of an existing RS (the handover and termination of a RS can be actively initiated by the management node or by RS), and so on, all may cause a change in the network topology relationship of the wireless transmission network group. These processes generally need the participation of the management node, thus the management node can acquire the change information of the network topology relationship according to corresponding signaling. If these changes occur in a wireless transmission sub-network administrated by an agent node, the agent node will report the updated topology relationship of the wireless transmission sub-network to the management node, thereby the management node can update the original wireless network topology information of the wireless transmission network group.

Step 13, the management node utilizes the wireless network topology information of the group and a corresponding strategy to manage the RSs or MSs subordinated to it.

One example is: when a RS or mobile station requests a handover from one RS to another RS within the group, the base station judges the number of hops needed by the handover to the target RS, and if the number of hops exceeds to a specified threshold, such as 2, the request may be denied or another target node may be selected for the RS or mobile station, which can avoid the long delay after the access. However, the present invention is not limited to this specific case of management, and in practice, there may be a lot of applications in management such as configuration, scheduling and handover.

### The second scheme

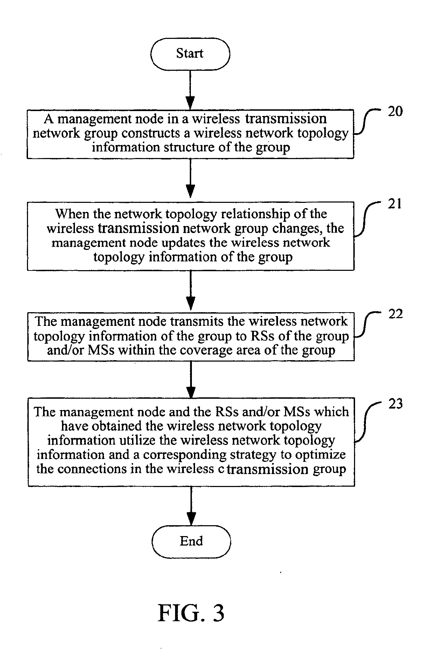

As shown in FIG. 3, the adaptive management method of a wireless transmission network in this scheme comprises the following steps:
Step 20, a management node in a wireless transmission network group constructs a wireless network topology information structure of the group;
Step 21, the management node updates the wireless network topology information of the group when the network topology relationship of the wireless transmission network group changes;

The above two steps are the same as those in the first scheme.

Step 22, the management node transmits the wireless network topology information of the group to RSs of the group and/or MSs in the coverage of the group;

In this scheme, the management node transmit the wireless network topology information of the group to all the RSs in the group, but in other cases, the information may just be transmitted to part of the RSs, such as the RSs of agent nodes, or first-hop RSs.

Transmission of the wireless topology relationship table can be implemented through the following methods: A. Add a configuration indication information unit in the existing downlink data indication message to indicate the position and size of the wireless network configuration information data such as the wireless network topology information and wireless link status information. B. Directly use a configuration indication message carrying configuration information such as the wireless network topology information and wireless link status information. The configuration information may be broadcasted to each node in the wireless transmission network group. When the management node actively transmits the configuration information, in order to decrease the load of network, the management node transmits the configuration information by broadcast only if the configuration information changes. For a node without the configuration information, it may acquire the configuration information of the wireless network in a point-to-point mode though an active request. The configuration information of the wireless network comprises at least an ID to indicate the numbering of the information. And when the configuration information changes, the ID needs to be changed.

Since a RS of an agent node can also constructs the wireless network topology information structure of a wireless transmission sub-network, for the present invention, a RS may have the topology information of the whole wireless transmission network group, or the topology information of the wireless transmission sub-network, or no topology information at all.

When transmitting information, the management node may broadcast the wireless network topology information of the group in a broadcasting channel to facilitate RSs and MSs acquiring more information about the wireless transmission network. Nodes in the wireless transmission network group may ask the management node for the wireless link topology information and the management node provides the corresponding wireless link topology information according to the application.

Step 23, the management node and the RSs and/or MSs that have acquired the wireless network topology information optimize the connections in the wireless transmission network group, utilizing the wireless network topology information and a corresponding strategy.

One example is: a RS may control the access of a new RS according to the network topology information of the whole wireless transmission network group or that of the transmission sub-network subordinated to it, for example, when a RS at the second hop receives an access request from a new RS, it may reject the access.

Another example is, if a MS acquires the network topology information from a broadcast message, it can determine the number of hops for the handover to a candidate RS according to the information, and if it is a third hop RS, the MS will not access to it even though its signal is the strongest, but select one from the RSs or BSs of the second hop or above whose signal is the strongest to perform the handover.

Similarly, the present invention is not limited to this specific case of management.

Obviously, the two management methods in the first scheme and the second scheme can be applied simultaneously, that is, the third and fourth steps in the second scheme can also be performed in the first scheme.

### The third scheme

In this scheme, on the basis of the construction and update of the wireless network topology information, the link status information of wireless links is further detected, recorded and updated, and in accordance with the wireless link status, wider and more effective management is carried out.

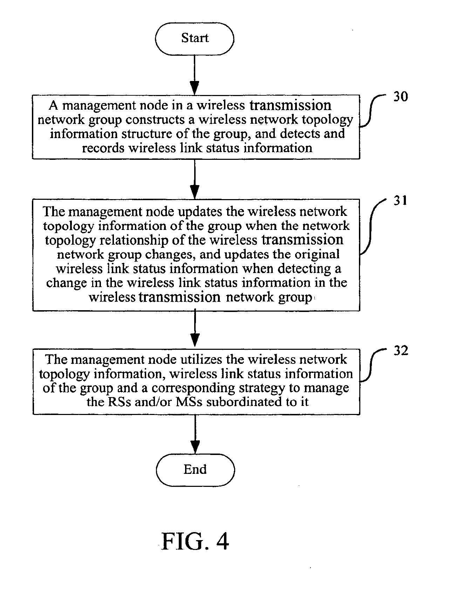

As shown in FIG. 4, the method of this scheme comprises the following steps:
Step 30, a management node in a wireless transmission network group constructs a wireless network topology information structure of the group, and detects and records wireless link status information;

The wireless link status information comprises channel interference ratio/noise ratio (CINR), wireless link package loss/packet error rate, delay of the processing and transmission in the wireless links, the actual throughout of each wireless link and the resources configured for the wireless links, and so on. One or any combination of these parameters may be adopted, and other parameters may also be adopted.

The wireless link status information can be obtained through the following two methods:
1) Obtain the information according to detection results of the service signals, for a wireless link directly connecting to the management node (the base station generally), the management node can detect the relative parameters of the uplink link status, and requests the node at the other end to report the relative parameters of the downlink status (reporting method such as periodical reporting or event triggering reporting may be adopted); for the link status between other nodes, the node of the previous hop obtains the information with an identical method and reports it to the management node.
2) Obtain the information according to the detection results of test signals, the management node (generally the base station) designates one or more nodes in the topology to send one or a series of test signals, and designates other nodes to cooperate for the test and return the test results to the node sending the signals or directly to the management node. The node sending the signals or the management node acquires the status information of the relative wireless links according to the detection results, and if the node sending the signals is not the management node, it should report the updated wireless link status information to the management node.

In this case, multiple detection methods may be utilized, for example, after the initial access of a new RS, the management node designates the RS to send test signals, and designates other RSs to cooperate for the detection and return the test results (such as strength of the RS test signals received, signal to noise ratio, and so on) to the base station, and the management node can acquire the status of the relative links through analysis, and judge whether the access node of the RS should be adjusted according to the topology relationship and the status of the wireless links.

An alternative is, when the network is comparatively idle, the management node chooses the base station and all the RSs accessed to by some other RSs to send above-mentioned test signals and designates the nodes at the other ends within the topology relationship to cooperate for the test and return the test results, and this can guarantee that status of each wireless link in the topology can be tested. The management node analyzes and updates the wireless link status information in the wireless transmission network group according to the test results, and adjusts the connection relationship of the wireless transmission network according to the current wireless network topology information and the new wireless link status information. Step 31, the management node updates the wireless network topology information of the group when the network topology relationship of the wireless transmission network group changes, and updates the original wireless link status information when detecting a change in the wireless link status information in the wireless transmission network group;

The update of the network topology relationship may be independent of the update of the wireless link status information. The update of the wireless link status information can also be performed according to the two methods described above, that is, the update is performed after obtaining the wireless link status information according to the detection results of the service signals or the update is performed after obtaining the wireless link status information according to the detection results of the test signals.

Step 32, the management node manages the RSs and/or MSs subordinated to it, utilizing the wireless network topology information, wireless link status information and a corresponding strategy of the group.

In this scheme, with the obtained wireless link status information, the management node carries out a more rational and intelligent management, which will be described through the following examples:
After a detection, if the base station finds that a first-hop RS is too busy, it may designate the second-hop RS subordinated to the first-hop RS to handover to another first-hop RS, which is an adaptive load balancing operation.

When a RS initially accesses to a first-hop RS, generally, it selects a RS with the strongest signal, then if the base station finds that the link status between the first-hop RS and the base station is too bad, for example, too crowded, the base station may let the RS to handover to another RS whose signal might not be the strongest, but the quality of the link on the whole path is better.

When a RS needs a handover, the base station or a RS as an agent node may perform a weighted computation according to the status of the multiple wireless links on the path, according to the wireless network topology information and wireless link status information, to select a target node with the best quality of service (QoS) for the RS.

### The fourth scheme

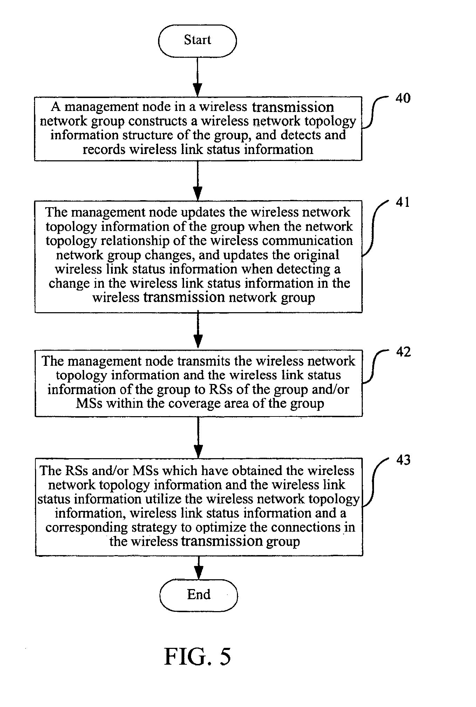

As shown in FIG. 5, the adaptive management method of a wireless transmission network in this scheme comprises the following steps:
Step 40, a management node in a wireless transmission network group constructs a wireless network topology information structure of the group, detects and records wireless link status information;
Step 41, the management node updates the wireless network topology information of this group when the network topology relationship of the wireless transmission network group changes, and updates the original wireless link status information when detecting a change in the wireless link status information in the wireless transmission network group;

The above two steps are the same as those in the third scheme.

Step 42, the management node transmits the wireless network topology information of the group and the wireless link status information to the RSs of the group and/or the MSs in the coverage of the group;

The management node may transmit the wireless network topology information and the wireless link status information of the group to all the RSs of the group or just part of the RSs, such as first-hop RSs or RSs accessed to by some other RSs. The management node may also broadcast the wireless network topology information and wireless link status information of the group in a broadcasting channel, and the MSs may receive the information before the access. In addition, nodes in the wireless transmission network group may ask the management node for the wireless link status information, and the management node provides the corresponding wireless link status information according to the application.

Step 43, the RSs and/or MSs which have obtained the wireless network topology information and the wireless link status information optimize the connections in the wireless transmission network group, utilizing the wireless network topology information, wireless link status information and a corresponding strategy

Here, in the control of the access of a new RS or MS, a RS may also take the relative wireless link status into consideration, besides the number of hops, thus may perform the control more rationally, where the third scheme may be referred to. So is the case in the update of the wireless links, the number of hops and the wireless link status may both be considered for the selection of a target node.

Obviously, the two management methods in the third scheme and the fourth scheme can be applied simultaneously, that is, the third and fourth steps in the third scheme can be performed in the fourth scheme.

In addition, in any one of the above schemes, management nodes of adjacent wireless transmission networks may interchange the wireless network topology information and wireless links information of the respective wireless transmission network group, and during a handover, when a RS detects a node in an adjacent cell, the base station can select a node which meets the requirement of QoS as the target node more accurately according to the topology information and the wireless link status information of the communication network group to which the node in the adjacent cell belongs.

The interchange between the management nodes may comprise the following situations:
1) A management node actively notifies an adjacent base station when there is an update in the topology relationship (wireless link status information may be included) of the wireless transmission network group.
2) A management node actively requests the management node in an adjacent cell to provide the wireless network topology information (wireless link status information may also be included) of the adjacent cell.

A management node may further transmit the wireless network topology information and wireless link status information of an adjacent cell to all or part of the RSs in the group, so when these RSs detect a signal from the adjacent cell during a handover, they can also select a node which meets the requirement of QoS as the target node more accurately.

### Method for a wireless relay station/mobile station to join a wireless transmission network group

The method for a wireless relay station/mobile station to join a wireless transmission network group in accordance with the present invention comprises the following embodiments:

### The first embodiment

In this embodiment, after an access, a wireless communication device judges whether it needs a handover according to its acquired wireless network topology information and wireless link status information, and if yes, the topology relationship of the wireless transmission network group is updated after the handover, and the joining process is completed.

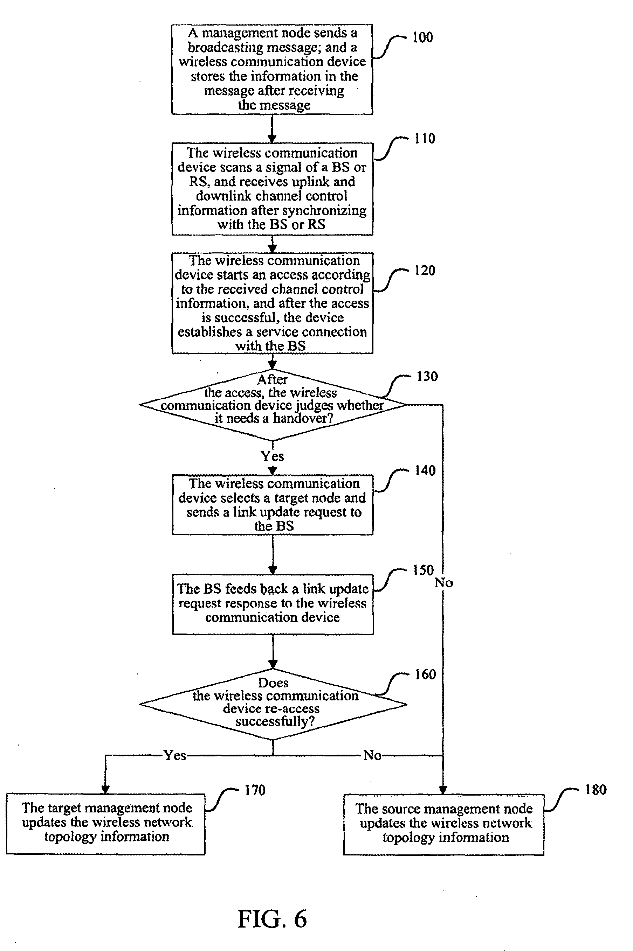

FIG. 6 is a flow chart of the method for a wireless communication device to join a wireless transmission network in accordance with the first embodiment of the present invention. As shown in FIG. 6, the method comprises the following steps:
Step 100, a management node sends a broadcasting message, comprising uplink and downlink channel control information, and also wireless network topology information and wireless link status information of the wireless transmission network group corresponding to the management node, and a wireless communication device (RS or MS) receives and stores the above information;

In above-mentioned uplink and downlink channel control information, the BS may separately describe the control information sent to a relay station and the control information sent to a mobile station.

Above-mentioned wireless network topology information and wireless link status information may be carried and sent in an added new message field in an existing broadcasting message, such as DCD (Downlink Channel Description) message in IEEE802.16 air interface protocol or may be carried and sent in a new broadcasting message, such as a wireless topology broadcasting message.

Step 110, a wireless communication device which newly enters into the area subordinated to a BS scans a signal of the BS or a RS, and the device receives the uplink and downlink channel control information after synchronizing with the BS or RS;

The area subordinated to the BS includes the coverage area extended by the RSs in the wireless transmission network group.

Step 120, said wireless communication device starts an access process according to the received channel control information, and after the access is successful, the device establishes a service connection with the BS;

The newly joined wireless communication device may directly access to the BS or the access may be implemented through one or more intermediate RSs. So is the case in the following several embodiments.

Step 130, after the access, the wireless communication device performs a handover judgment for judging whether it needs a handover according to information of the wireless transmission network group (including wireless network topology information, or wireless network topology information together with wireless link status information) and information of adjacent cells (wireless network topology information and wireless link status information of the wireless transmission network groups of the adjacent cells may be included, optional), if yes, proceeds to step 140, otherwise proceeds to step 180;

Above-mentioned handover judgment strategy may be: selecting, from the nodes whose hop number is not larger than 2, the BS or RS whose wireless link's quality is the best as the target node; that the wireless link's quality is the best may be the weighted average result of the multiple wireless links on the path to the BS.

Step 140, said wireless communication device selects a target node from the detected nodes, sends a link update request to the BS, and the link update request carries the identifier of the target node and the wireless link status information.

Step 150: after receiving above-mentioned link update request, the BS refers to the identifier of the target node included in the request, and according to the wireless network topology information, wireless link status information of the group, information of adjacent cells (wireless network topology information and/or wireless link status information of the wireless transmission network groups of the adjacent cells may be included, optional), and a corresponding handover strategy to feed back a link update request response to the wireless communication device to indicate whether the wireless communication device is allowed to handover and which target BS or RS the device should handover to.

Above-mentioned wireless network topology information of the group can be referred to as handover judgment basic information; and moreover, the handover judgment basic information may further comprise: wireless link status information and information of adjacent cells.

Step 160: after receiving the link update request response, said wireless communication device re-accesses to the target BS or RS; and if the access is successful, the device establishes a service connection, and proceeds to step 170, while if the access fails , proceeds to step 180;

The target BS or RS here may be in the same wireless transmission network group of the initial access or in another wireless transmission network group.

Step 170, the management node (the target management node) in the wireless transmission network group to which said wireless communication device re-accesses updates the wireless network topology information of the wireless transmission network group, and the joining process of the wireless communication device is completed, and the method ends.

Step 180, the management node (the source management node) in the wireless transmission network group to which said wireless communication device initially accesses updates the wireless network topology information of the wireless transmission network group, and the joining process of the wireless communication device is completed.

In above-mentioned step 170 and step 180, the method for the management node to update the wireless network topology information is classified into the following cases according to different access modes of the wireless communication device:
If said wireless communication device accesses through a RS, and the RS is an agent node, the RS updates the wireless network topology information of the sub-network subordinated to it, and reports to the management node, then the management node updates the wireless network topology information of the wireless transmission network group;
If said wireless communication device accesses through a RS, and the RS is not an agent node, the RS directly reports to the management node, and the management node updates the wireless network topology information of the wireless transmission network group;
If said wireless communication device directly accesses to a BS, and the BS is a management node, the BS may directly update the wireless network topology information of the wireless transmission network group;
If said wireless communication device directly accesses to a BS, and the BS is not a management node, the BS needs to report to the management node, and the management node updates the wireless network topology information of the wireless transmission network group;

The above cases also exist in other embodiments.

In addition, after a management node in a wireless transmission network group updates the wireless network topology information, it may send the information to other nodes. Afterwards, the management node in the wireless transmission network group performs an update after obtaining newly added wireless link status information and may further send the information to other nodes.

### The second embodiment

In this embodiment, after the access of a wireless communication device, the management node of the wireless transmission network group to which the wireless communication device accesses judges whether the device needs a handover according to the network topology information and wireless link status information, and if yes, the topology relationship of the wireless transmission network group is updated after the handover, and the joining process is completed.

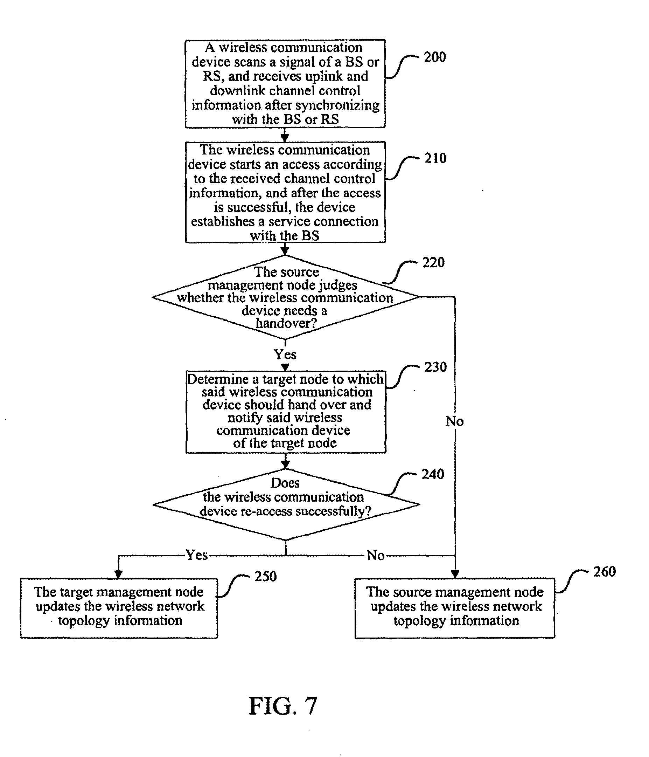

FIG. 7 is a flow chart of the method for a wireless communication device to join a wireless transmission network in accordance with the second embodiment of the present invention. As shown in FIG. 7, the method comprises the following steps:
Step 200, a wireless communication device which newly enters into the area subordinated to a BS scans a signal of the BS or a RS, and receives uplink and downlink channel control information after synchronizing with the BS or RS;

The area subordinated to the BS includes the coverage area extended by the RSs in the wireless transmission network group.

Step 210, said wireless communication device starts an access process according to the received channel control information, and after the access is successful, the device establishes a service connection with the BS;

Step 220, the management node (the source management node) of the wireless transmission network group to which the wireless communication device accesses performs a handover judgment to judge whether the wireless communication device needs a handover, according to the stored handover judgment basic information of the wireless transmission network group (including the wireless network topology information, or the wireless network topology information together with the wireless link status information), information of adjacent cells (optional) and a corresponding handover strategy, and if yes, proceeds to step 230, otherwise proceeds to step 260;

If the BS is not a management node, it needs to notify the management node of the node to which the wireless communication device accesses, that is, to notify the management node of the update information of the wireless communication device's access, which comprises the identifier information of the wireless communication device and the identifier information of the node to which the wireless communication device accesses.

Step 230, the management node determines a target node (target BS or RS) to which the wireless communication device should handover, and notifies said wireless communication device of the handover to the target node.

Step 240: said wireless communication device re-accesses to the target node, and if the access is successful, the device establishes a service connection, and proceeds to step 250, while if the access fails, proceeds to step 260.

Step 250: said wireless communication device establishes a service connection and the management node of the wireless transmission network group to which the wireless communication device re-accesses updates the wireless network topology information of its wireless transmission network group, and the joining process is completed, and the method ends.

Step 260: said management node in the wireless transmission network group to which said wireless communication device initially accesses updates the wireless network topology information of its wireless transmission network group, and the joining process is completed.

After a management node in a wireless transmission network group updates the wireless network topology information, it may send the information to other nodes. Afterwards, the management node in the wireless transmission network group performs an update after obtaining newly added wireless link status information and may further send the information to other nodes.

### The third embodiment

In this embodiment, after the access of a wireless communication device, a RS of the wireless transmission network group to which the wireless communication device accesses judges whether the wireless communication device needs a handover according to the wireless network topology information and wireless link status information, and if yes, the network topology information is updated after the handover, and the joining process is completed.

The premise of this embodiment is: the management node sends the wireless network topology information and wireless link status information of the whole wireless transmission network group to the RS that the wireless communication device accesses to, that is, the RS stores the information. Or the RS stores the wireless network topology information and wireless link status information of the transmission sub-network to which the RS belongs.

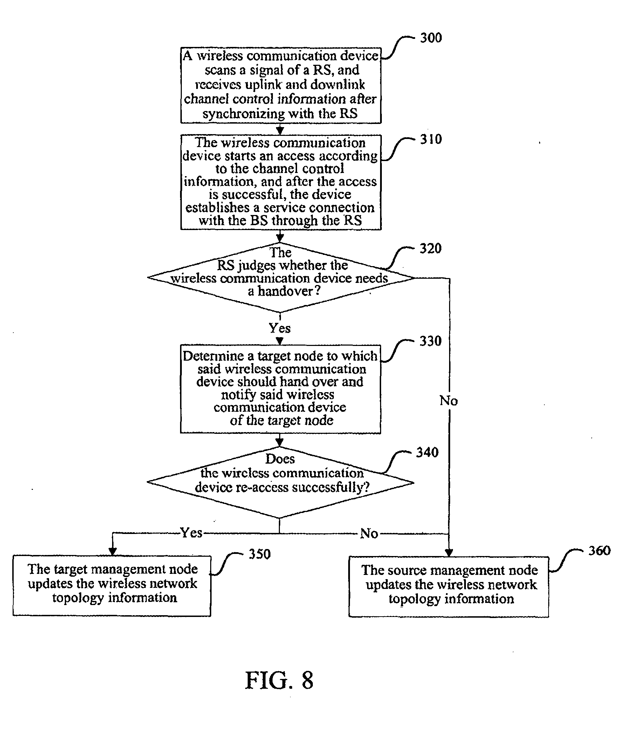

FIG. 8 is a flow chart of the method for a wireless communication device to join a wireless transmission network in accordance with the third embodiment of the present invention. As shown in FIG. 8, the method comprises the following steps:
Step 300, a wireless communication device which newly enters into the area subordinated to a BS scans a signal of the RS, and receives uplink and downlink channel control information after synchronizing with the RS;
Step 310, said wireless communication device starts an access process according to the received channel control information, and after the access is successful, the device establishes a service connection with the BS through said RS;
Step 320, the RS to which said wireless communication device accesses performs a handover judgment to judge whether the wireless communication device needs a handover according to the stored handover judgment basic information (including the wireless network topology information, or the wireless network topology information together with the wireless link status information, or the wireless network topology information of the sub-network, or the wireless network topology information together with the wireless link status information of the sub-network), information of adjacent cells (optional) and a preset corresponding handover strategy, and if yes, proceeds to step 330, otherwise proceeds to step 360;

Above-mentioned wireless network topology information and wireless link status information may belong to the whole communication network group or to the transmission sub-network.

Step 330, said RS determines a target BS or RS to which the wireless communication device should handover and notifies said wireless communication device of the handover to the target node.

Step 340: said wireless communication device re-accesses to the target BS or RS, and after the access is successful, the device establishes a service connection, and proceeds to step 350, while if the access fails, proceeds to step 360.

Step 350: the management node (the target management node) of the wireless transmission network group to which said wireless communication device re-accesses updates the wireless network topology information of its wireless transmission network group, and the joining process is completed, and the method ends.

Step 360: the management node (the source management node) in the wireless transmission network group to which said wireless communication device initially accesses updates the wireless network topology information of its wireless transmission network group, and the joining process is completed.

After a management node in a wireless transmission network group updates the wireless network topology information, it may send the information to other nodes. Afterwards, the management node in the wireless transmission network group performs an update after obtaining newly added wireless link status information and may further send the information to other nodes.

Similarly, it is possible that the management node only stores the wireless network topology information of the wireless transmission network group and does not store the wireless link status information; in this situation, it is merely needed to delete the "wireless link status information" in the above process.

### The fourth embodiment

In this embodiment, after the access of a wireless communication device, the management node in the wireless transmission network group to which the wireless communication device accesses judges whether the wireless communication device needs a handover according to the network topology information and real-time detected wireless link status information, if yes, the network topology information is updated after the handover, and the joining process is completed.

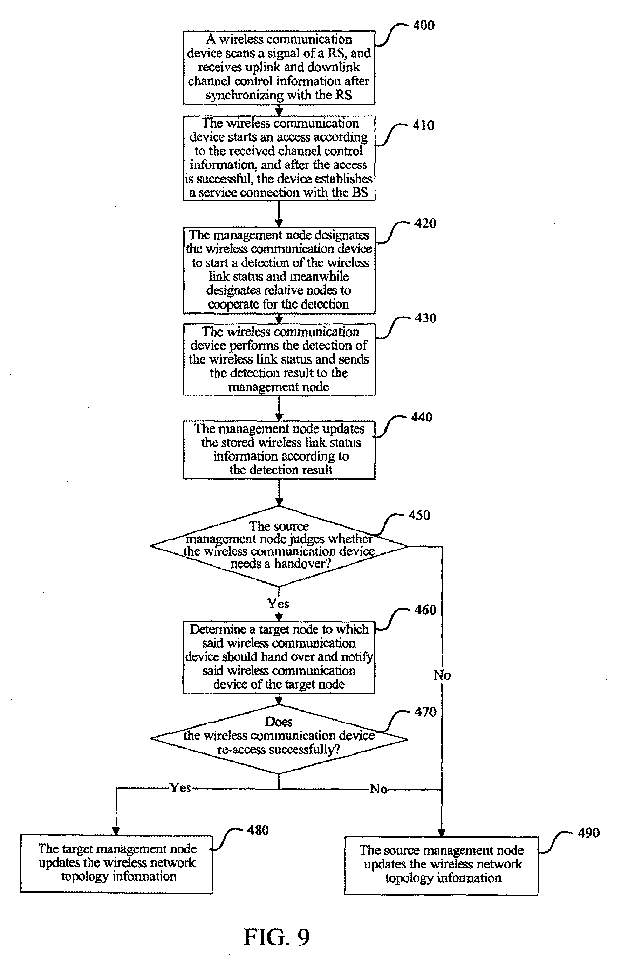

FIG. 9 is a flow chart of the method for a wireless communication device to join a wireless transmission network in accordance with the fourth embodiment of the present invention. As shown in FIG. 9, the method comprises the following steps:
Step 400, a wireless communication device which newly enters into the area subordinated to a BS scans a signal of the BS or a RS, and receives uplink and downlink channel control information after synchronizing with the BS or RS;
Step 410, said wireless communication device starts an access process according to the received channel control information, and after the access is successful, the device establishes a service connection with the BS;
Step 420, the management node in the wireless transmission network group to which said wireless communication device accesses designates the newly accessed wireless communication device to start a detection of the wireless link status and meanwhile designates relative nodes to cooperate for the detection.
Step 430: the wireless communication device performs the detection of the wireless link status and sends the detection result to the management node;

Above-mentioned wireless link status detection may be performed with the following method: the wireless communication device sends outward one or a series of test signals; after receiving the test signals, the relative nodes feed back test responses to the wireless device; and the wireless communication device generates a detection result, such as signal strength, signal to noise ratio, delay, and so on, according to the test responses, and sends the detection result to the management node.

Step 440: the management node acquires the information of the wireless link status between the newly accessed wireless communication device and the adjacent nodes according to the detection result, and updates the stored wireless link status information.

Step 450, the management node (the source management node) performs a handover judgment to judge whether the wireless communication device needs a handover according to the handover judgment basic information of the wireless transmission network group (including the stored wireless network topology information, above-mentioned real-time detected wireless link status information), information of adjacent cells (optional) and a preset corresponding strategy, if yes, proceeds to step 460, otherwise proceeds to step 490;

Step 460, the management node determines a target BS or RS to which said wireless communication device should handover, and notifies the wireless communication device of the handover to the target node.

Step 470: said wireless communication device re-accesses to the target node, and if the access is successful, the device establishes a service connection, and proceeds to step 480, while if the access fails, proceeds to step 490.

Step 480: the management node (the target management node) of the wireless transmission network group to which said wireless communication device re-accesses acquires the node to which the wireless communication device accesses and updates the wireless network topology information of its wireless transmission network group, and the joining process is completed, and the method ends.

Step 490: the management node (the source management node) in the wireless transmission network group to which said wireless communication device initially accesses acquires the node to which the wireless communication device accesses and updates the wireless network topology information of its wireless transmission network group, and the joining process is completed.

After a management node in a wireless transmission network group updates the wireless network topology information and wireless link status information, the management node may send the information to other nodes. And before sending the information, the management node may delete the wireless link status information which is found non-existent after detection.

In addition, in this embodiment, the latest wireless link status information can be acquired through real-time wireless link status detection, which facilitates a more accurate handover judgment.

### The fifth embodiment

In this embodiment, a handover judgment is not performed after the access of a wireless communication device, and the topology information of the wireless transmission network group is directly updated, and the joining process is completed.

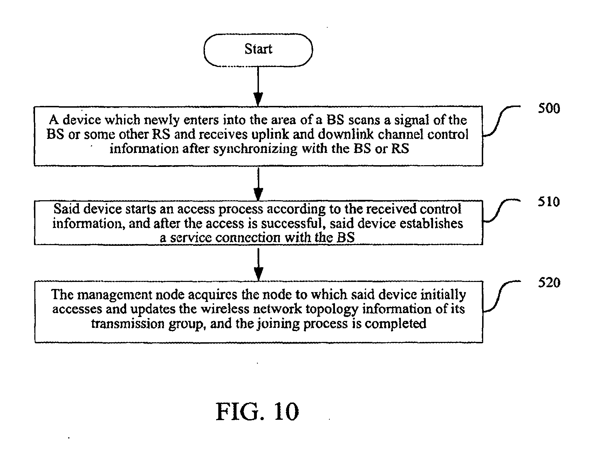

FIG. 10 is a flow chart of the method for a wireless communication device to join a wireless transmission network in accordance with the fifth embodiment of the present invention. As shown in FIG. 10, the method comprises the following steps:
Step 500, a wireless communication device which newly enters into the area subordinated to a BS scans a signal of the BS or a RS, and receives uplink and downlink channel control information after synchronizing with the BS or RS;
Step 510, said wireless communication device starts an access process according to the received channel control information, and after the access is successful, the device establishes a service connection with the BS;
Step 520, the management node acquires the node to which the wireless communication device initially accesses and updates the wireless network topology information of its wireless transmission network group, and the joining process is completed.

After a management node in a wireless transmission network group updates the wireless network topology information, it may send the information to other nodes. Afterwards, the management node may further perform the update and sending of the wireless link status information.

### Industrial Applicability

To sum up, with the method of the present invention, the topology relationship information, wireless link status information and information of adjacent cells can be fully utilized in a wireless communication system, so that a wireless relay station can access to a base station or wireless relay station which can provide better QoS, thereby a better service can be obtained and the overall performance of the wireless transmission network is improved. In addition, performing a handover judgment immediately after the access, can avoid an unnecessary information update process.

## Claims

1. A method for a wireless communication device to join a wireless transmission network, the wireless transmission network being a wireless transmission network group consisting of a base station and wireless relay stations subordinated to the base station; after said wireless communication device accesses to the wireless transmission network group through a source node, the method comprising the following steps of:
(a) if said wireless communication device needs a handover (130, 220, 320, 450), completes the handover successfully by accessing to a target node and establishes a service connection (160, 240, 340, 470), proceeding to step (b), otherwise proceeding to step (c);
**characterized by**:
(b) a management node of the wireless transmission network group to which the target node accessed to by said wireless communication device belongs updating stored wireless network topology information of the wireless transmission network group, to complete the joining of said wireless communication device (170, 250, 350, 480), and the method ending;
(c) the management node of the wireless transmission network group to which the source node accessed to by said wireless communication device belongs updating stored wireless network topology information of the wireless transmission network group, to complete the joining of said wireless communication device (180, 260, 360, 490);
wherein said source node is a source base station or source wireless relay station; and said target node is a target base station or target wireless relay station; and
the method further comprises: in step (b) and step (c),
if said target node or source node is a wireless relay station, and the wireless relay station is an agent node which stores the wireless network topology information of a transmission sub-network subordinated to the wireless relay station, the agent node updating the wireless network topology information, and reporting update information of the access of said wireless communication device to said management node; and said management node updating said stored wireless network topology information according to the update information;
if said target node or source node is a wireless relay station, and the wireless relay station is not an agent node, the wireless relay station reporting the update information of the access of said wireless communication device to said management node; and said management node updating said stored wireless network topology information according to the update information;
if said target node or source node is a base station, and the base station is the management node, the base station updating said stored wireless network topology information according to the update information of the access of said wireless communication device;
if said target node or source node is a base station, and the base station is not the management node, the base station reporting the update information of the access of said wireless communication device to said management node; and said management node updating said stored wireless network topology information according to the update information.

2. A method of claim 1, wherein said wireless communication device is a wireless relay station or a mobile station.

3. A method of claim 1, further comprising: in step (a), judging whether said wireless communication device needs said handover according to handover judgment basic information; and said handover judgment basic information comprising: the wireless network topology information of the wireless transmission network group to which said source node belongs.

4. A method of claim 3, wherein, step (a) further divides into the following sub-steps of:
(a11) said wireless communication device judging whether a handover is needed according to said handover judgment basic information and a predetermined handover judgment strategy (130), and if the handover is needed, said wireless communication device sending a link update request to said source base station (140); and judging whether the handover is allowed according to a link update response fed back by said source base station (150), and if the handover is allowed, proceeding to step (a12), otherwise proceeding to step (c);
(a12) said wireless communication device accessing to a target node designated in the link update response (160); and if the access is successful, proceeding to step (b); otherwise proceeding to step (c).

5. A method of claim 4, further comprising: in step (a11), after receiving said link update request, said source base station judging whether said wireless communication device is allowed to handover according to the handover judgment basic information and the predetermined handover judgment strategy, and if the handover is allowed, said source base station including identifier information of a target node selected in said link update response.

6. A method of claim 5, further comprising: in step (a11), said link update request comprising identifier information of a target node to which the handover is requested; and said source base station judging whether the handover is allowed further according to the identifier information.

7. A method of claim 3, wherein step (a) further divides into the following sub-steps of:
(a21) the management node of the wireless transmission network group to which said source node belongs judging whether said wireless communication device needs a handover according to said handover judgment basic information and a predetermined handover judgment strategy (220), if the handover is needed, the management node determining a target node, notifying said wireless communication device of the target node determined (230), and proceeding to step (a22); otherwise proceeding to step (c);
(a22) said wireless communication device accessing to said target node (240); and if the access is successful, proceeding to step (b); otherwise proceeding to step (c).

8. A method of claim 3, wherein said wireless communication device accesses to the wireless transmission network group through a source wireless relay station; and step (a) further divides into the following sub-steps of:
(a21) said source wireless relay station judging whether said wireless communication device needs a handover according to said handover judgment basic information and a predetermined handover judgment strategy (320), and if the handover is needed, said source wireless relay station determining a target node, notifying said wireless communication device of the target node determined (330), and proceeding to step (a22); otherwise proceeding to step (c);
(a22) said wireless communication device accessing to said target node (340); and if the access is successful, proceeding to step (b); otherwise proceeding to step (c).

9. A method of claim 8, wherein the wireless network topology information of the wireless transmission network group to which said source wireless relay station belongs comprised in said handover judgment basic information is the wireless network topology information of a sub-network of the source wireless relay station.

10. A method of claim 7, wherein said handover judgment basic information further comprises wireless link status information; and after said wireless communication device accesses to the wireless transmission network group through the source node, before step (a1), the method further comprises the following steps of:
(a31) said management node designating said wireless communication device to perform a detection of the wireless link status and designating relative nodes to cooperate for the detection (420);
(a32) said wireless communication device sending a test signal; and said relative nodes which receive said test signal feeding back test responses to said wireless communication device;
(a33) said wireless communication device generating a detection result according to said test responses and sending the detection result to said management node (430);
(a34) said management node acquiring the wireless link status information according to the detection result and updating the wireless link status information stored (440).

11. A method of claim 4, 7, 8, wherein, said handover judgment basic information further comprises: wireless link status information, and/or information of adjacent cells; and said information of adjacent cells is: the wireless network topology information, or the wireless network topology information together with the wireless link status information of adjacent wireless transmission network groups.

12. A method of claim 4, 7, 8, wherein said handover judgment strategy is: if a number of hops between a node and said wireless communication device is smaller than the number of hops between said source node and said wireless communication device, and/or a wireless link quality of the node is better than that of said source node, a handover is performed and the node is determined as the target node.

13. A method of claim 1, further comprising: after updating said wireless network topology information, said management node further updating corresponding wireless link status information.

14. A method of claim 1, further comprising: before said wireless communication device accesses to the wireless transmission network group through the source node, said wireless communication device receiving a broadcasting message from the wireless transmission network group; and storing the wireless network topology information and wireless link status information of the wireless transmission network group comprised in the message (100).

15. A method of claim 14, wherein said broadcasting message is a downlink channel description message.

16. A method of claim 1, wherein said wireless network topology information comprises information of a connection relationship and a number of connection hops between any two nodes in the wireless transmission network group; and said management node is a node in the wireless transmission network group in charge of constructing, updating and transmitting the wireless network topology information of the wireless transmission network group within the wireless transmission network group.

## Patentansprüche

1. Ein Verfahren für das Eintreten einer Vorrichtung zur drahtlosen Kommunikation in ein drahtloses Übertragungsnetz, wobei das drahtlose Übertragungsnetz eine drahtlose Übertragungsnetzgruppe ist, die aus einer Basisstation und drahtlosen Relaisstationen, welche der Basisstation untergeordnet sind, besteht; wobei das Verfahren, nachdem die Vorrichtung zur drahtlosen Kommunikation durch einen Ursprungsknoten auf die drahtlose Übertragungsnetzgruppe zugegriffen hat, die folgenden Schritte beinhaltet:
(a) wenn die Vorrichtung zur drahtlosen Kommunikation eine Übergabe benötigt (130, 220, 320, 450), erfolgreiches Abschließen der Übergabe durch Zugreifen auf einen Zielknoten und Etablieren eines Dienstanschlusses (160, 240, 340, 470), Übergehen zu Schritt (b), ansonsten Übergehen zu Schritt (c);
**gekennzeichnet durch**:
(b) **durch** einen Verwaltungsknoten der drahtlosen Übertragungsnetzgruppe, zu der der Zielknoten, auf den von der Vorrichtung zur drahtlosen Kommunikation zugegriffen wird, gehört, Aktualisieren gespeicherter Topologieinformationen des drahtlosen Netzes der drahtlosen Übertragungsnetzgruppe, um das Eintreten der Vorrichtung zur drahtlosen Kommunikation (170, 250, 350, 480) abzuschließen, und Enden des Verfahrens;
(c) **durch** den Verwaltungsknoten der drahtlosen Übertragungsnetzgruppe, zu der der Ursprungsknoten, auf den von der Vorrichtung zur drahtlosen Kommunikation zugegriffen wird, gehört, Aktualisieren gespeicherter Topologieinformationen des drahtlosen Netzes der drahtlosen Übertragungsnetzgruppe, um das Eintreten der Vorrichtung zur drahtlosen Kommunikation (180, 260, 360, 490) abzuschließen;
wobei der Ursprungsknoten eine Ursprungsbasisstation oder eine drahtlose Ursprungsrelaisstation ist; und der Zielknoten eine Zielbasisstation oder eine drahtlose Zielrelaisstation ist; und
das Verfahren ferner Folgendes beinhaltet: in Schritt (b) und Schritt (c),
wenn der Zielknoten oder Ursprungsknoten eine drahtlose Relaisstation ist und die drahtlose Relaisstation ein Agentenknoten ist, der die Topologieinformationen des drahtlosen Netzes eines Übertragungsunternetzes, das der drahtlosen Relaisstation untergeordnet ist, speichert, Aktualisieren, **durch** den Agentenknoten, der Topologieinformationen des drahtlosen Netzes und Melden von Aktualisierungsinformationen des Zugriffs der Vorrichtung zur drahtlosen Kommunikation an den Verwaltungsknoten; und Aktualisieren, **durch** den Verwaltungsknoten, der gespeicherten Topologieinformationen des drahtlosen Netzes gemäß den Aktualisierungsinformationen;
wenn der Zielknoten oder Ursprungsknoten eine drahtlose Relaisstation ist und die drahtlose Relaisstation kein Agentenknoten ist, Melden, **durch** die drahtlose Relaisstation, der Aktualisierungsinformationen des Zugriffs der Vorrichtung zur drahtlosen Kommunikation an den Verwaltungsknoten; und Aktualisieren, **durch** den Verwaltungsknoten, der gespeicherten Topologieinformationen des drahtlosen Netzes gemäß den Aktualisierungsinformationen;
wenn der Zielknoten oder Ursprungsknoten eine Basisstation ist und die Basisstation der Verwaltungsknoten ist, Aktualisieren, **durch** die Basisstation, der gespeicherten Topologieinformationen des drahtlosen Netzes gemäß den Aktualisierungsinformationen des Zugriffs der Vorrichtung zur drahtlosen Kommunikation;
wenn der Zielknoten oder Ursprungsknoten eine Basisstation ist und die Basisstation nicht der Verwaltungsknoten ist, Melden, **durch** die Basisstation, der Aktualisierungsinformationen des Zugriffs der Vorrichtung zur drahtlosen Kommunikation an den Verwaltungsknoten; und Aktualisieren, **durch** den Verwaltungsknoten, der gespeicherten Topologieinformationen des drahtlosen Netzes gemäß den Aktualisierungsinformationen.

2. Verfahren gemäß Anspruch 1, wobei die Vorrichtung zur drahtlosen Kommunikation eine drahtlose Relaisstation oder eine Mobilstation ist.

3. Verfahren gemäß Anspruch 1, das ferner Folgendes beinhaltet: in Schritt (a) Beurteilen, ob die Vorrichtung zur drahtlosen Kommunikation die Übergabe benötigt, gemäß Übergabebeurteilungs-Grundinformationen; und wobei die Übergabebeurteilungs-Grundinformationen Folgendes beinhalten: die Topologieinformationen des drahtlosen Netzes der drahtlosen Übertragungsnetzgruppe, zu der der Ursprungsknoten gehört.

4. Verfahren gemäß Anspruch 3, wobei sich Schritt (a) weiter in die folgenden Unterschritte aufteilt:
(a11) Beurteilen, durch die Vorrichtung zur drahtlosen Kommunikation, ob eine Übergabe benötigt wird, gemäß den Übergabebeurteilungs-Grundinformationen und einer vorgegebenen Übergabebeurteilungsstrategie (130), und wenn die Übergabe benötigt wird, Senden, durch die Vorrichtung zur drahtlosen Kommunikation, einer Verbindungsaktualisierungsanfrage an die Ursprungsbasisstation (140); und Beurteilen, ob die Übergabe erlaubt ist, gemäß einer Verbindungsaktualisierungsantwort, die von der Ursprungsbasisstation (150) rückgemeldet wird, und wenn die Übergabe erlaubt ist, Übergehen zu Schritt (a12), ansonsten Übergehen zu Schritt (c);
(a12) Zugreifen, durch die Vorrichtung zur drahtlosen Kommunikation, auf einen Zielknoten, der in der Verbindungsaktualisierungsantwort nominiert ist (160); und wenn der Zugriff erfolgreich ist, Übergehen zu Schritt (b); ansonsten Übergehen zu Schritt (c).

5. Verfahren gemäß Anspruch 4, das ferner Folgendes beinhaltet: in Schritt (a11), nach dem Empfangen der Verbindungsaktualisierungsanfrage, Beurteilen, durch die Ursprungsbasisstation, ob die Vorrichtung zur drahtlosen Kommunikation übergeben darf, gemäß den Übergabebeurteilungs-Grundinformationen und der vorgegebenen Übergabebeurteilungsstrategie, und wenn die Übergabe erlaubt ist, Einschließen, durch die Ursprungsbasisstation, von Kennungsinformationen eines Zielknotens, der in der Verbindungsaktualisierungsantwort ausgewählt ist.

6. Verfahren gemäß Anspruch 5, das ferner Folgendes beinhaltet: in Schritt (a11) Beinhalten, in der Verbindungsaktualisierungsanfrage, von Kennungsinformationen eines Zielknotens, an den die Übergabe erfragt wird; und ferner Beurteilen, durch die Ursprungsbasisstation, ob die Übergabe erlaubt ist, gemäß den Kennungsinformationen.

7. Verfahren gemäß Anspruch 3, wobei sich Schritt (a) weiter in die folgenden Unterschritte aufteilt:
(a21) durch den Verwaltungsknoten der drahtlosen Übertragungsnetzgruppe, zu der der Ursprungsknoten gehört, Beurteilen, ob die Vorrichtung zur drahtlosen Kommunikation eine Übergabe benötigt, gemäß den Übergabebeurteilungs-Grundinformationen und einer vorgegebenen Übergabebeurteilungsstrategie (220), wenn die Übergabe benötigt wird, Bestimmen, durch den Verwaltungsknoten, eines Zielknotens, Benachrichtigen der Vorrichtung zur drahtlosen Kommunikation über den bestimmten Zielknoten (230) und Übergehen zu Schritt (a22); ansonsten Übergehen zu Schritt (c);
(a22) durch die Vorrichtung zur drahtlosen Kommunikation, Zugreifen auf den Zielknoten (240); und wenn der Zugriff erfolgreich ist, Übergehen zu Schritt (b); ansonsten Übergehen zu Schritt (c).

8. Verfahren gemäß Anspruch 3, wobei die Vorrichtung zur drahtlosen Kommunikation durch eine drahtlose Ursprungsrelaisstation auf die drahtlose Übertragungsnetzgruppe zugreift; und sich Schritt (a) weiter in die folgenden Unterschritte aufteilt:
(a21) durch die drahtlose Ursprungsrelaisstation, Beurteilen, ob die Vorrichtung zur drahtlosen Kommunikation eine Übergabe benötigt, gemäß den Übergabebeurteilungs-Grundinformationen und einer vorgegebenen Übergabebeurteilungsstrategie (320), und wenn die Übergabe benötigt wird, Bestimmen, durch die drahtlose Ursprungsrelaisstation, eines Zielknotens, Benachrichtigen der Vorrichtung zur drahtlosen Kommunikation über den bestimmten Zielknoten (330) und Übergehen zu Schritt (a22); ansonsten Übergehen zu Schritt (c);
(a22) durch die Vorrichtung zur drahtlosen Kommunikation, Zugreifen auf den Zielknoten (340); und wenn der Zugriff erfolgreich ist, Übergehen zu Schritt (b); ansonsten Übergehen zu Schritt (c).

9. Verfahren gemäß Anspruch 8, wobei die Topologieinformationen des drahtlosen Netzes der drahtlosen Übertragungsnetzgruppe, zu der die drahtlose Ursprungsrelaisstation gehört, beinhaltet in den Übergabebeurteilungs-Grundinformationen, die Topologieinformationen des drahtlosen Netzes eines Unternetzes der drahtlosen Ursprungsrelaisstation sind.

10. Verfahren gemäß Anspruch 7, wobei die Übergabebeurteilungs-Grundinformationen ferner Statusinformationen der drahtlosen Verbindung beinhalten; und das Verfahren, nachdem die Vorrichtung zur drahtlosen Kommunikation durch den Ursprungsknoten auf die drahtlose Übertragungsnetzgruppe zugegriffen hat, vor Schritt (a1), ferner die folgenden Schritte beinhaltet:
(a31) durch den Verwaltungsknoten, Nominieren der Vorrichtung zur drahtlosen Kommunikation, eine Detektion des Status der drahtlosen Verbindung durchzuführen, und Nominieren verwandter Knoten, für die Detektion zu kooperieren (420);
(a32) durch die Vorrichtung zur drahtlosen Kommunikation, Senden eines Testsignals; und durch die verwandten Knoten, die das Testsignal empfangen, Rückmelden von Testantworten an die Vorrichtung zur drahtlosen Kommunikation;
(a33) durch die Vorrichtung zur drahtlosen Kommunikation, Erzeugen eines Detektionsergebnisses gemäß den Testantworten und Senden des Detektionsergebnisses an den Verwaltungsknoten (430);
(a34) durch den Verwaltungsknoten, Erfassen der Statusinformationen der drahtlosen Verbindung gemäß dem Detektionsergebnis und Aktualisieren der gespeicherten Statusinformationen der drahtlosen Verbindung (440).

11. Verfahren gemäß Anspruch 4, 7, 8, wobei die Übergabebeurteilungs-Grundinformationen ferner Folgendes beinhalten: Statusinformationen der drahtlosen Verbindung und/oder Informationen benachbarter Zellen; und die Informationen benachbarter Zellen Folgendes sind: die Topologieinformationen des drahtlosen Netzes oder die Topologieinformationen des drahtlosen Netzes zusammen mit den Statusinformationen der drahtlosen Verbindung benachbarter drahtloser Übertragungsnetzgruppen.

12. Verfahren gemäß Anspruch 4, 7, 8, wobei die Übergabebeurteilungsstrategie folgende ist: Wenn eine Anzahl Hops zwischen einem Knoten und der Vorrichtung zur drahtlosen Kommunikation kleiner als die Anzahl Hops zwischen dem Ursprungsknoten und der Vorrichtung zur drahtlosen Kommunikation ist und/oder eine Qualität der drahtlosen Verbindung des Knotens besser als die des Ursprungsknotens ist, wird eine Übergabe durchgeführt und der Knoten wird als der Zielknoten bestimmt.

13. Verfahren gemäß Anspruch 1, das ferner Folgendes beinhaltet: nach dem Aktualisieren der Topologieinformationen des drahtlosen Netzes ferner Aktualisieren, durch den Verwaltungsknoten, entsprechender Statusinformationen der drahtlosen Verbindung.

14. Verfahren gemäß Anspruch 1, das ferner Folgendes beinhaltet: bevor die Vorrichtung zur drahtlosen Kommunikation durch den Ursprungsknoten auf die drahtlose Übertragungsnetzgruppe zugreift, Empfangen, durch die Vorrichtung zur drahtlosen Kommunikation, einer Rundrufnachricht von der drahtlosen Übertragungsnetzgruppe; und Speichern der Topologieinformationen des drahtlosen Netzes und von Statusinformationen der drahtlosen Verbindung der drahtlosen Übertragungsnetzgruppe, die in der Nachricht enthalten sind (100).

15. Verfahren gemäß Anspruch 14, wobei die Rundrufnachricht eine Abwärtsverbindungskanalbeschreibungsnachricht ist.

16. Verfahren gemäß Anspruch 1, wobei die Topologieinformationen des drahtlosen Netzes Informationen einer Anschlussbeziehung und einer Anzahl von Anschlusshops zwischen beliebigen zwei Knoten in der drahtlosen Übertragungsnetzgruppe beinhalten; und der Verwaltungsknoten ein Knoten in der drahtlosen Übertragungsnetzgruppe ist, der für die Konstruktion, Aktualisierung und Übertragung der Topologieinformationen des drahtlosen Netzes der drahtlosen Übertragungsnetzgruppe innerhalb der drahtlosen Übertragungsnetzgruppe zuständig ist.

## Revendications

1. Une méthode pour qu'un dispositif de communication sans fil se rattache à un réseau de transmission sans fil, le réseau de transmission sans fil étant un groupe de réseau de transmission sans fil constitué d'une station de base et de stations relais sans fil subordonnées à la station de base ; la méthode comprenant, après que ledit dispositif de communication sans fil a accédé au groupe de réseau de transmission sans fil via un noeud source, les étapes suivantes :
(a) si ledit dispositif de communication sans fil nécessite un transfert (130, 220, 320, 450), le fait d'accomplir avec succès le transfert en accédant à un noeud cible et d'établir une connexion de service (160, 240, 340, 470), le fait de passer à l'étape (b), sinon de passer à l'étape (c) ;
**caractérisée par :**
(b) **le fait qu'**un noeud de gestion du groupe de réseau de transmission sans fil auquel appartient le noeud cible auquel ledit dispositif de communication sans fil a accédé mette à jour des informations de topologie de réseau sans fil stockées du groupe de réseau de transmission sans fil, afin d'accomplir le rattachement dudit dispositif de communication sans fil (170, 250, 350, 480), et le fait que la méthode prenne fin ;
(c) **le fait que** le noeud de gestion du groupe de réseau de transmission sans fil auquel appartient le noeud source auquel ledit dispositif de communication sans fil a accédé mette à jour des informations de topologie de réseau sans fil stockées du groupe de réseau de transmission sans fil, afin d'accomplir le rattachement dudit dispositif de communication sans fil (180, 260, 360, 490) ;
où ledit noeud source est une station de base source ou une station relais sans fil source ; et ledit noeud cible est une station de base cible ou une station relais sans fil cible ; et
la méthode comprend en outre : dans l'étape (b) et l'étape (c),
si ledit noeud cible ou noeud source est une station relais sans fil, et que la station relais sans fil est un noeud agent qui stocke les informations de topologie de réseau sans fil d'un sous-réseau de transmission subordonné à la station relais sans fil, le fait que le noeud agent mette à jour les informations de topologie de réseau sans fil, et rapporte des informations de mise à jour de l'accès dudit dispositif de communication sans fil audit noeud de gestion ; et le fait que ledit noeud de gestion mette à jour lesdites informations de topologie de réseau sans fil stockées suivant les informations de mise à jour ;
si ledit noeud cible ou noeud source est une station relais sans fil, et que la station relais sans fil n'est pas un noeud agent, le fait que la station relais sans fil rapporte les informations de mise à jour de l'accès dudit dispositif de communication sans fil audit noeud de gestion ; et le fait que ledit noeud de gestion mette à jour lesdites informations de topologie de réseau sans fil stockées suivant les informations de mise à jour ;
si ledit noeud cible ou noeud source est une station de base, et que la station de base est le noeud de gestion, le fait que la station de base mette à jour lesdites informations de topologie de réseau sans fil stockées suivant les informations de mise à jour de l'accès dudit dispositif de communication sans fil ;
si ledit noeud cible ou noeud source est une station de base, et que la station de base n'est pas le noeud de gestion, le fait que la station de base rapporte les informations de mise à jour de l'accès dudit dispositif de communication sans fil audit noeud de gestion ; et le fait que ledit noeud de gestion mette à jour lesdites informations de topologie de réseau sans fil stockées suivant les informations de mise à jour.

2. Une méthode de la revendication 1, où ledit dispositif de communication sans fil est une station relais sans fil ou une station mobile.

3. Une méthode de la revendication 1, comprenant en outre : dans l'étape (a), le fait de juger si ledit dispositif de communication sans fil nécessite ledit transfert suivant des informations basiques de jugement de transfert ; et lesdites informations basiques de jugement de transfert comprenant : les informations de topologie de réseau sans fil du groupe de réseau de transmission sans fil auquel appartient ledit noeud source.

4. Une méthode de la revendication 3, où l'étape (a) se divise en outre en les sous-étapes suivantes :
(a11) le fait que ledit dispositif de communication sans fil juge si un transfert est nécessaire suivant lesdites informations basiques de jugement de transfert et une stratégie de jugement de transfert prédéterminée (130), et si le transfert est nécessaire, le fait que ledit dispositif de communication sans fil envoie une demande de mise à jour de liaison à ladite station de base source (140) ; et le fait de juger si le transfert est autorisé suivant une réponse de mise à jour de liaison donnée en retour par ladite station de base source (150), et si le transfert est autorisé, le fait de passer à l'étape (a12), sinon de passer à l'étape (c) ;
(a12) le fait que ledit dispositif de communication sans fil accède à un noeud cible désigné dans la réponse de mise à jour de liaison (160) ; et si l'accès se fait avec succès, le fait de passer à l'étape (b) ; sinon de passer à l'étape (c).

5. Une méthode de la revendication 4, comprenant en outre : dans l'étape (a11), après réception de ladite demande de mise à jour de liaison, le fait que ladite station de base source juge si ledit dispositif de communication sans fil est autorisé à effectuer un transfert suivant les informations basiques de jugement de transfert et la stratégie de jugement de transfert prédéterminée, et si le transfert est autorisé, le fait que ladite station de base source inclue des informations identificatrices d'un noeud cible sélectionné dans ladite réponse de mise à jour de liaison.

6. Une méthode de la revendication 5, comprenant en outre : dans l'étape (a11), le fait que ladite demande de mise à jour de liaison comprenne des informations identificatrices d'un noeud cible vers lequel le transfert est demandé ; et le fait que ladite station de base source juge si le transfert est autorisé en outre suivant les informations identificatrices.

7. Une méthode de la revendication 3, où l'étape (a) se divise en outre en les sous-étapes suivantes :
(a21) le fait que le noeud de gestion du groupe de réseau de transmission sans fil auquel appartient ledit noeud source juge si ledit dispositif de communication sans fil nécessite un transfert suivant lesdites informations basiques de jugement de transfert et une stratégie de jugement de transfert prédéterminée (220), si le transfert est nécessaire, le fait que le noeud de gestion détermine un noeud cible, le fait de notifier ledit dispositif de communication sans fil du noeud cible déterminé (230), et le fait de passer à l'étape (a22) ; sinon de passer à l'étape (c) ;
(a22) le fait que ledit dispositif de communication sans fil accède audit noeud cible (240) ; et si l'accès se fait avec succès, le fait de passer à l'étape (b) ; sinon de passer à l'étape (c).

8. Une méthode de la revendication 3, où ledit dispositif de communication sans fil accède au groupe de réseau de transmission sans fil via une station relais sans fil source ; et l'étape (a) se divise en outre en les sous-étapes suivantes :
(a21) le fait que ladite station relais sans fil source juge si ledit dispositif de communication sans fil nécessite un transfert suivant lesdites informations basiques de jugement de transfert et une stratégie de jugement de transfert prédéterminée (320), et si le transfert est nécessaire, le fait que ladite station relais sans fil source détermine un noeud cible, le fait de notifier ledit dispositif de communication sans fil du noeud cible déterminé (330), et le fait de passer à l'étape (a22) ; sinon de passer à l'étape (c) ;
(a22) le fait que ledit dispositif de communication sans fil accède audit noeud cible (340) ; et si l'accès se fait avec succès, le fait de passer à l'étape (b) ; sinon de passer à l'étape (c).

9. Une méthode de la revendication 8, où les informations de topologie de réseau sans fil du groupe de réseau de transmission sans fil auquel appartient ladite station relais sans fil source comprises dans lesdites informations basiques de jugement de transfert sont les informations de topologie de réseau sans fil d'un sous-réseau de la station relais sans fil source.

10. Une méthode de la revendication 7, où lesdites informations basiques de jugement de transfert comprennent en outre des informations de statut de liaison sans fil ; et la méthode comprenant en outre, après que ledit dispositif de communication sans fil a accédé au groupe de réseau de transmission sans fil via le noeud source, avant l'étape (a1), les étapes suivantes :
(a31) le fait que ledit noeud de gestion désigne ledit dispositif de communication sans fil pour effectuer une détection du statut de liaison sans fil et désigne des noeuds relatifs afin de coopérer pour la détection (420) ;
(a32) le fait que ledit dispositif de communication sans fil envoie un signal d'essai ; et que lesdits noeuds relatifs qui reçoivent ledit signal d'essai donnent en retour des réponses d'essai audit dispositif de communication sans fil ;
(a33) le fait que ledit dispositif de communication sans fil génère un résultat de détection suivant lesdites réponses d'essai et envoie le résultat de détection audit noeud de gestion (430) ;
(a34) le fait que ledit noeud de gestion acquière les informations de statut de liaison sans fil suivant le résultat de détection et mette à jour les informations de statut de liaison sans fil stockées (440).

11. Une méthode de la revendication 4, de la revendication 7, de la revendication 8, où lesdites informations basiques de jugement de transfert comprennent en outre : des informations de statut de liaison sans fil, et/ou des informations de cellules adjacentes ; et lesdites informations de cellules adjacentes sont : les informations de topologie de réseau sans fil, ou les informations de topologie de réseau sans fil conjointement avec les informations de statut de liaison sans fil de groupes de réseau de transmission sans fil adjacents.

12. Une méthode de la revendication 4, de la revendication 7, de la revendication 8, où ladite stratégie de jugement de transfert est : si un nombre de bonds entre un noeud et ledit dispositif de communication sans fil est plus petit que le nombre de bonds entre ledit noeud source et ledit dispositif de communication sans fil, et/ou une qualité de liaison sans fil du noeud est meilleure que celle dudit noeud source, il est effectué un transfert et le noeud est déterminé comme étant le noeud cible.

13. Une méthode de la revendication 1, comprenant en outre : après la mise à jour desdites informations de topologie de réseau sans fil, le fait que ledit noeud de gestion mette en outre à jour des informations de statut de liaison sans fil correspondantes.

14. Une méthode de la revendication 1, comprenant en outre : avant que ledit dispositif de communication sans fil n'accède au groupe de réseau de transmission sans fil via le noeud source, le fait que ledit dispositif de communication sans fil reçoive un message de diffusion provenant du groupe de réseau de transmission sans fil ; et le fait de stocker les informations de topologie de réseau sans fil et les informations de statut de liaison sans fil du groupe de réseau de transmission sans fil comprises dans le message (100).

15. Une méthode de la revendication 14, où ledit message de diffusion est un message de description de voie descendante.

16. Une méthode de la revendication 1, où lesdites informations de topologie de réseau sans fil comprennent des informations d'une relation de connexion et d'un nombre de bonds de connexion entre deux noeuds quels qu'ils soient dans le groupe de réseau de transmission sans fil ; et ledit noeud de gestion est un noeud dans le groupe de réseau de transmission sans fil en charge de la construction, de la mise à jour et de la transmission des informations de topologie de réseau sans fil du groupe de réseau de transmission sans fil à l'intérieur du groupe de réseau de transmission sans fil.
